# EUROPEAN PATENT APPLICATION

(11) **EP 4 629 264 A1**
(43) Date of publication of application: **08.10.2025**
(21) Application number: 23897612.0
(22) Date of filing: 21.11.2023
(51) Int. Cl.: H01B 1/22, B22F 1/00, B22F 1/05, B22F 1/16, B22F 9/00, H01B 1/00

(54) **GOLD PASTE AND METHOD FOR MANUFACTURING GOLD PASTE**

(30) Priority: 28.11.2022 JP 2022189474
(71) Applicant: Tanaka Precious Metal Technologies Co., Ltd., Tokyo 103-0025 (JP)
(72) Inventor: NAKAMURA, Noriaki, Hiratsuka-shi, Kanagawa 254-0021 (JP); OGAWA, Kohei, Hiratsuka-shi, Kanagawa 254-0021 (JP); MURAI, Hiroshi, Hiratsuka-shi, Kanagawa 254-0021 (JP); MAKITA, Yuichi, Hiratsuka-shi, Kanagawa 254-0021 (JP); KOIZUMI, Teruaki, Hiratsuka-shi, Kanagawa 254-0021 (JP)
(74) Representative: Weickmann & Weickmann PartmbB
(86) International application number: PCT/JP2023/041778
(87) International publication number: WO 2024/116964

(57) **Abstract**

The present invention provides a gold paste containing a gold powder and an organic solvent. The gold powder has purity of 99.9% by mass or more, and an average particle size of 0.1 µm or more and 0.4 µm or less. The gold powder is at least partially covered with a covering agent containing at least one of: any element of Cl, Br, I, and S, or an ion containing any of these elements, or a functional group containing any of these elements. The coverage ratio defined as a ratio S_{C}/S_{Au} is 33% or more and 100% or less, wherein Sc is a total cross-sectional area of the element derived from the covering agent calculated based on a concentration of the element in 1 g of the gold paste, and S_{Au} is a specific surface area of the gold powder. The gold powder is excellent in low-temperature sinterability, and a gold paste including the same is good in processability in a dried state after coating.

## Description

### FIELD OF THE INVENTION

The present invention relates to a gold paste suitable for applications in the field of electronics such as semiconductor devices and semiconductor elements, including formation of electrodes and wirings, bonding, and sealing. More particularly, the present invention relates to a gold paste that is excellent in processability in a dried state after coating, and can be subsequently fired to exhibit suitable electric properties, and also to a method for producing the same.

### DESCRIPTION OF THE RELATED ART

For forming, bonding, and sealing of electrodes (bumps) and wirings for various applications of electric/electronic components, semiconductor devices, semiconductor elements, power devices, MEMS, and the like, brazing materials and solders were widely used in the past, but use of metal pastes (metal slurries) has been expanded in these years. The present applicant proposed a gold paste obtained by mixing a gold powder of a submicron order (1 µm or less) containing gold (Au) of high purity (of 99.9% by mass or more) with an organic solvent, as a metal paste suitably used in the aforementioned various applications (for example, Patent Documents 1 and 2).

In forming an electrode or wiring, or forming a bonding member from a metal paste, it is necessary to apply the metal paste to a member to be coated, such as a substrate, and after drying the coating, to volatilize components excluding the metal powder. Since the gold paste proposed by the present applicant basically consists of only a gold powder and an organic solvent, the organic solvent and the like can be comparatively easily removed by volatilization. Besides, the gold powder of this gold paste contains high purity and fine gold particles, and can form a dense sintered body by sintering at a low temperature (of 350°C or less). In the production of semiconductor elements and devices for which low temperature process is recommended, such low-temperature sinterability is advantageous.

### Prior Art Document

### Patent Document

Patent Document 1
   Japanese Patent No. 5613253
Patent Document 2
   Japanese Patent Application Laid-Open No. 2021-025091

### SUMMARY OF THE INVENTION

### Problems to be Solved by the Invention

In forming, from a gold paste, an electrode or wiring in a desired pattern or a bonding member in a desired shape, the gold paste is applied to a base material masked with a metal mask, a resist or the like. Then, an organic solvent contained in the gold paste is removed by volatilization in a drying step, and thereafter, an excessive portion of a gold powder remaining on the mask is removed with a squeegee or the like. The reason why the excessive portion is removed after drying is as follows: if the squeegeeing is performed on the paste immediately after the coating, which has viscosity and fluidity, the surface of the paste filled in a hole of the mask pattern is roughened.

According to examinations made by the present inventors, however, in a case of using a conventional gold paste, the strength of a dried matter of the gold powder subjected to the drying step is so high that it may be difficult to remove the excessive portion of the gold powder in some cases. Specifically, there may be a case in which a dried powder may remain on the surface of the mask or the surface of the base material, or a case in which a portion of the gold powder present in a hole of the mask pattern is also scooped out. In this regard, there are a few examinations of processability of a dried matter of a gold powder obtained from drying the gold paste as described above. Conventional gold pastes were developed for mainly solving problems with sinterability in low temperature-heating, and dispersibility and stability of a gold powder in a paste state, and there is no gold paste developed in consideration of workability in the drying step, which is an intermediate step.

There is no problem, however, in the direction of development of conventional gold pastes. The low-temperature sinterability is a significant property in production process of electronic and semiconductor devices in which a gold paste is used. The dispersibility and stability of a gold paste are also properties necessary for forming a fine pattern. Accordingly, even when the processability of a dried matter of a gold paste is improved, it is not preferable to impair the merits of the conventional technique such as the low-temperature sinterability.

The present invention has been made against the background discussed above, and based on the gold paste proposed by the present applicant, and provides a gold paste improved in processability in a dried state after coating while the merits, such as the low-temperature sinterability, of the gold paste proposed by the present applicant are maintained, and a method for producing the gold paste.

### Solution to Problem

As is clarified by the conventional technique, the low-temperature sinterability of a gold paste is due to a fine particle size of a gold powder. A gold paste having good low-temperature sinterability and having a low sintering temperature forms a dried matter having high strength also in a drying step. As a result of examination made by the present inventors, it has also been confirmed that when the average particle size of a gold powder is increased, the gold paste forms a dried matter having a reduced strength and good processability. In other words, there is a trade-off relationship between the low-temperature sinterability of a gold paste and the processability of a dried matter obtained from drying. In addition, according to examination made by the present inventors, when the average particle size of a gold powder is large, a sintered body obtained from sintering is liable to have a high volume resistivity.

Accordingly, solving the above-described problem should be based on the premise that the average particle size of the gold powder is within the range of the conventional technique, and on this basis, it is necessary to consider features of a gold paste in which a bonding force between particles of the gold powder is reduced only in a dried state. Based on this strategy, the present inventors have made earnest studies, resulting in finding a method involving coating a gold powder with an element or an ion of chlorine or the like, or a prescribed functional group, which is used as a barrier against bonding of the gold powder during drying to thereby control the strength of a dried matter.

The presence of chlorine or the like in a gold paste itself has, however, been known. As clarified by Patent Document 2 and the related art described therein, a conventional gold paste contains chlorine derived from a gold powder produced by a wet reduction method. The wet reduction method is a method in which a reducing agent is added to a solution of a gold salt (gold compound) to precipitate gold particles, and chlorides (such as chloroauric acid salt) are used in many cases as the gold salt used as the raw material. Therefore, chlorine derived from this raw material is contained in the resultant gold paste together with the gold powder. In the conventional techniques including that of Patent Document 2, it is considered that if chlorine contained in the gold paste remains in a sintered body after sintering, a corrosive acidic solution will be generated, and hence the chlorine is removed by thorough washing at the stage of production of the gold powder.

The present inventors do not consider that the issue of chlorine raised by the conventional techniques should be ignored. The present inventors have considered, however, that even though chlorine is not completely removed, the problem of residual chlorine can be dealt with by appropriately setting conditions for sintering to adjust the amount of the chlorine to a level such that no chlorine remains after the sintering step. Besides, the present inventors have considered that, as the element for covering a gold powder to ensure processability of a dried matter obtained from drying, some elements other than chlorine and functional groups containing any of these elements have a similar effect to that of chlorine, and have found that the object of the present invention can be achieved by substituting the whole or a part of chlorine with any of these elements or functional groups.

The present invention that solves the aforementioned problem is drawn to a gold paste containing a gold powder and an organic solvent; wherein the gold powder has purity of 99.9% by mass or more, and has an average particle size of 0.1 µm or more and 0.4 µm or less; at least a part of the gold powder is covered with a covering agent containing at least one of: any element of Cl, Br, I, and S, or an ion containing any of these elements, or a functional group containing any of these elements; and a coverage ratio defined as a ratio S_{C}/S_{Au} is 33% or more and 100% or less, wherein Sc is a total cross-sectional area of the element derived from the covering agent calculated based on a concentration of the element in 1 g of the gold paste, and S_{Au} is a specific surface area of the gold powder. Now, the present invention will be described in more detail, and the gold paste of the present invention contains, as essential components, the gold powder and the organic solvent. These components will be described below.

### (1) Gold Powder

The gold powder used in the gold paste of the present invention is one having purity (gold concentration) of 99.9% by mass or more, and having an average particle size of 0.1 µm or more and 0.4 µm or less. As in the conventional technique, the gold paste of the present invention forms a sintered body after coating in many cases when the gold paste is used for an electrode or a bonding member. When the sintered body of the gold powder is used as a bonding member or the like, it is further necessary to be densified by compression under pressure. The purity and the average particle size of the gold powder of the gold paste are specified in order to clarify suitable conditions for the formation and use of the sintered body of the gold powder. The purity of the gold powder is 99.9% by mass or more, and the reason for this is as follows: gold with low purity has high hardness, and hence plastic deformation of the sintered body occurring in densifying under pressure is difficult to allow to proceed.

The reason that the average particle size of the gold powder be 0.1 µm or more and 0.4 µm or less is that one having a particle size larger than 0.4 µm will have a high sintering temperature, and hence low-temperature sinterability, that is, the property assumed to be essential to the gold paste of the present application, cannot be exhibited. A particle size smaller than 0.1 µm, which is the lower limit, easily cause aggregation when such a gold powder is made into the form of a paste.

In the present invention, as the average particle size of the gold powder, a mean volume-surface diameter (MA; hereinafter sometimes referred to as D_{Au}) is employed. The average particle size of the gold powder contained in the gold paste can be measured by collecting the gold paste, and volatilizing an organic solvent from the gold paste. In the measurement of the average particle size of the gold powder, the gold powder is observed and photographed with an electron microscope (such as a SEM, or a TEM), and a plurality of (the number N; preferably 1000 or more) gold particles are arbitrarily selected in the resultant photograph or image to measure the particle size. When measuring, computer software such as image analysis software may be appropriately used. The particle size to be used may be, for example, a particle size obtained by a biaxial method employing calculation based on a major axis and a minor axis of a particle in the image; or a caliper diameter (Feret diameter) based on the length of the side of the rectangle circumscribing a particle in the image. In using the caliper diameter, at least one of a minimum caliper diameter, a maximum caliper diameter, and an average caliper diameter is preferably obtained. The mean volume-surface diameter of the gold powder, D_{Au}, is calculated by an expression "D_{Au} = (ΣNd³)/(ΣNd²)" with the diameter d measured for N gold particles. The mean volume-surface diameter of the gold powder, D_{Au}, is used also for calculating a specific surface area of the gold powder in calculation of a coverage ratio with a covering agent described below.

In the gold paste of the present invention, the particle size distribution of the gold powder is not especially limited as long as the average particle size falls within the above-described range. Therefore, even a gold particle having a particle size smaller than 0.1 µm or a gold particle having a particle size larger than 0.4 µm may be contained in the gold powder, as long as the average particle size falls within the above-described range. In particular, a gold particle having a particle size larger than 0.4 µm may be contained in a given amount. Specifically, it is acceptable even if 40% by volume or less of a gold particle having a particle size larger than 0.4 µm is contained. A comparatively large gold particle having a particle size larger than 0.4 µm has the effect of loosing bonding of the gold powder in drying, and may contribute to improvement of the processability of a dried matter. A large gold particle may, however, hinder sintering to affect an electric property of a sintered body, and hence an excessive amount of large gold particle contained should be avoided. Besides, since the effect of improving the processability of a dried matter can be sufficiently ensured by using a covering agent, the presence of the gold particle having a particle size larger than 0.4 µm is not essential, and it is acceptable even if the proportion of the gold particle is 0%.

The gold powder contains gold with high purity, as described above, and the gold powder may contain inevitable impurities. Examples of inevitable impurity elements include Na, Al, Fe, Cu, Se, Sn, Ta, Pt, Bi, Pd, Ag, and Si. A total amount of the inevitable impurity elements is preferably 500 ppm or less, and more preferably 300 ppm or less. These inevitable impurities can be present not only in a state in which they are adhering or attaching to the surface of the gold powder but also in a state in which they are solid-dissolved with the gold powder.

Also the measurement of the purity of the gold powder contained in the gold paste can be performed based on the gold powder obtained by collecting the gold paste, and volatilizing the organic solvent from the gold paste. The purity of the gold powder can be measured not only by analysis through inductively coupled plasma emission spectrometry (ICP) but also by energy dispersive X-ray spectrometry (EDX), or fluorescent X-ray analysis (XRF), for example.

The gold powder of the gold paste of the present invention is at least partially covered with a covering agent containing at least one of: any element of Cl, Br, I, and S, or an ion containing any of these elements, or a functional group containing any of these elements. The "element of Cl, Br, I, and S, or an ion containing any of these elements" refers to Cl, Br, **I,** and S in an atomic state, ions of these elements, that is, Cl⁻, Br⁻, I⁻, and S²⁻, and ions containing these elements, such as SO₃⁻, SO₄²⁻. Examples of the functional group containing Cl, Br, **I,** or S include a thiol group, and a halogen group (a chloro group, a bromo group, or an iodo group).

The covering agent has the effect of inhibiting gold particles from strongly bonding to one another in the drying step to impart processability to the resultant dried matter. The atoms or ions of Cl, Br, I, and S, or the functional groups containing these elements are selected as the covering agent because these remain in the gold powder in the drying step to impart processability to the dried matter, and in addition, because these are volatilized and/or decomposed by heating in the sintering step, and hence are difficult to remain in the sintered body.

Among those described above, a preferable covering agent is Cl or Cl⁻ as the element or ion, and a thiol group as the functional group. Cl can form a part of the covering agent when a chloride is used as a gold salt or a reducing agent in the production step (wet reduction step) of the gold powder. S of a thiol group has a suitable bonding force to gold, is difficult to desorb at room temperature and a drying temperature, and hence can maintain the function as the covering agent. Besides, a thiol compound can form a monomolecular coating on the surface of the gold powder, and the coverage ratio therewith can be easily controlled. In addition, desorption of Cl and a thiol group proceeds at a sintering temperature, and hence these are less likely to remain. The covering agent contains at least one of the element or ion of Cl or the like, and the functional group such as a thiol group. Only the element or ion of Cl or the like may cover the gold powder, or the functional group such as a thiol group may cover the gold powder together with the element or ion of Cl or the like.

In the present invention, the coverage ratio of the gold powder with the covering agent needs to be 33% or more. The coverage ratio is defined as a ratio S_{C}/S_{Au}, wherein Sc is the total cross-sectional area calculated based on the concentration of the element derived from the covering agent in 1 g of the gold paste, and Sc is a specific surface area of the gold powder. The concentration of the element derived from the covering agent refers to the concentration of Cl, Br, I, or S that is the element contained in the covering agent.

The total cross-sectional area of the element derived from the covering agent, Sc, is specifically calculated as follows. The concentration of the element contained in the covering agent in 1 g of the gold paste is designated as Cc (ppm), and the atomicity of the element derived from the covering agent in the gold paste, Nc, is defined as "Nc = (C_{C} × 10⁻⁶)/M_{C} × (6.02 × 10²³)", wherein M_{C} is the atomic weight of the element. The total cross-sectional area of the element, Sc, is defined as "Sc = Nc × πr_{C}²" wherein r_{C} is the ionic radius of the element. The calculation is performed with the following ionic radius of the element derived from the covering agent: Cl (Cl⁻: 1.81 angstroms), Br (Br⁻: 1.96 angstroms), I (I⁻: 2.20 angstroms), and S (S²-: 1.84 angstroms).

On the other hand, the specific surface area (m²/g) of the gold powder, S_{Au}, can be calculated based on the average particle size (0.1 µm or more and 0.4 µm or less) of the gold powder. The average particle size of the gold powder is designated as D_{Au} and the density of gold (19.32 × 10⁶ g/m³) is designated as ρ_{Au}. The specific surface area (m²/g) of the gold powder, S_{Au}, is calculated by "S_{Au} = 6/(ρ_{Au} × D_{Au})".

Thus, S_{C}/S_{Au}, which is the ratio between the total cross-sectional area Sc and the specific surface area of the gold powder, S_{Au}, calculated as described above, corresponds to the coverage ratio. The method for calculating the coverage ratio described above is based on simulation assuming that all of the elements (Cl, Br, I, and S) contained in the gold paste contribute to the covering of the gold powder, and that the respective elements and functional groups cover it in the form of monoatoms or monomolecules. In the present invention, the coverage ratio is simply defined based on the concentration of Cl, Br, I, or S in the gold paste and the average particle size of the gold powder.

When a plurality of elements derived from the covering agent are contained in the gold paste, the total cross-sectional areas of the respective elements are calculated by the above-described method, the sum of these cross-sectional areas is used as the total cross-sectional area of the covering agent, Sc, and the ratio of it to the specific surface area of the gold powder, S_{Au}, (S_{C}/S_{Au}) is obtained as the coverage ratio. For example, when Cl and a thiol group are used as the covering agent, the Cl concentration and S concentration in 1 g of the gold paste are measured to calculate the total cross-sectional areas of the respective elements, and the sum of the cross-sectional areas is used as the total cross-sectional area of the covering agent, Sc. The concentration of each element in 1 g of the gold paste can be obtained by analyzing 1 g of the gold paste, or the gold paste in an amount of 1 g or more can be analyzed to divide the found value in the analysis by the mass subjected to the analysis.

As a method for analyzing the element (Cl, Br, I, or S) contained in the covering agent in the gold paste, a thermal desorption method is suitably employed, in which the organic solvent is removed from the gold paste, and the resultant gold powder is heated at a high temperature to desorb Cl or the like for the analysis. Examples of the thermal desorption method includes combustion-coulometric titration and combustion-ion chromatography, which can be appropriately selected in accordance with the element to be analyzed.

In the gold paste of the present invention, the above-described coverage ratio is 33% or more. If the coverage ratio of the gold powder is low, the bonding between the gold particles increases during the drying, and hence the processability of the resultant dried matter is reduced. In addition to the effect of ensuring the processability of the dried matter, the covering agent in the gold paste also functions as a stabilizer of the gold powder in a gold paste state to exhibit the effect of suppressing aggregation. In addition, the covering agent stabilizes the state of the dried matter obtained by applying and drying the gold paste. Even when a time from the formation of the dried matter to the processing is long, the processability of the dried matter can be maintained as long as the coverage ratio of the gold powder is suitable. Based on results of examinations on the coverage ratio with the covering agent, the present inventors have determined that the coverage ratio of the gold paste of the present invention is 33% or more. In view of improvement of the processability of the gold paste after the drying, the upper limit of the coverage ratio can be 100%.

It is noted that the gold paste of the present invention may contain the elements (Cl, Br, I, and S) derived from the covering agent in an amount with which the coverage ratio calculated by the above-described calculation method is higher than 100%. The elements corresponding to the excess over the coverage ratio of 100% do not, however, work as the covering agent, and in addition, could affect the sinterability of the gold paste and be difficult to remove even by the sintering step if they are present in an excessive amount. Therefore, the elements derived from the covering agent are contained preferably in a concentration of 1000 ppm or less in the gold paste.

The gold paste of the present invention needs to contain the covering agent in an amount such that the coverage ratio of the gold powder is 33% or more. The coverage ratio is calculated based on the concentration of the constituent elements (Cl, Br, I, and S) of the covering agent in the gold paste as well as the type (ionic radius) and the average particle size of the gold powder, and therefore, there is no need to define the general lower limit of the concentration of the elements. In consideration of the range of the average particle size (0.1 µm or more and 0.4 µm or less) of the gold powder of the present invention, however, the elements are contained in the gold paste preferably in an amount of 150 ppm or more.

### (2) Organic Solvent

The solvent in which the gold powder is dispersed is an organic solvent. The organic solvent can easily volatilize and disappear by heating, and hence can make the bonding portion clean. As the organic solvent, an organic solvent having a boiling point of 200 to 400°C (under atmospheric pressure) is preferred. If the boiling point of the organic solvent is lower than 200°C, the evaporation rate is so high that the gold particles may aggregate, and such a solvent is difficult to handle because the solvent may volatilize during the application of the paste. On the other hand, an organic solvent having a boiling point higher than 400°C may remain in the bonding portion even after heating.

Specific preferred examples of the organic solvent usable in the present invention include branched saturated aliphatic dihydric alcohols, and monoterpene alcohols. More specifically, examples of the branched saturated aliphatic dihydric alcohols include menthanol, propylene glycol, 1,2-butanediol, 1,3-butanediol, 1,2-pentanediol, 1,3-pentanediol, 1,4-pentanediol, 1,5-pentanediol, 2,3-pentanediol, 2,4-pentanediol, 1,2-hexanediol, 1,3-hexanediol, 1,4-hexanediol, 1,5-hexanediol, 1,6-hexanediol, and derivatives thereof such as 2,4-diethyl-1,5-pentanediol. Examples of the monoterpene alcohols include citronellol, geraniol, nerol, menthol, terpineol (α, β), carveol, twill alcohol, pinocampheol, β-phenthyl alcohol, dimethyl octanol, hydroxycitronellol, 2,4-diethyl-1,5-pentanediol, trimethyl pentanediol monoisobutyrate, and derivatives thereof. A compound obtained by condensation reaction between monovalent carboxylic acid and polyhydric alcohol is also usable, and examples of such a compound include triethylene glycol di-2-ethylhexanoate, and triethylene glycol di-2-ethylputanoate. Since the boiling point of an organic solvent is liable to depend on the number of carbon atoms of the organic solvent, the solvent to be used preferably has 5 to 20 carbon atoms. From this point of view, the organic solvent may be an aromatic hydrocarbon, and for example, alkyl benzene may be used without causing any functional problem.

As the organic solvent, a single organic solvent may be used, or a mixture of two or more organic solvents having different boiling points may be used. When the organic solvent contains solvents having a low boiling point and a high boiling point, a treatment for adjusting the content of the gold powder can be easily performed by removing the organic solvent having a low boiling point by volatilization.

### (3) Other Components of Gold Paste

The gold paste of the present invention contains, as the basic components, the two components: the gold powder and the organic solvent, and may appropriately contain an additive. As the additive, one or more selected from acrylic resins, cellulose resins, and alkyd resins may be contained. When these resins are further added, the aggregation of the gold powder in the paste is prevented, so that a more homogeneous bonding portion can be formed. Examples of the acrylic resins include a methyl methacrylate polymer. Examples of the cellulose resins include ethyl cellulose. Example of the alkyd resins include a phthalic anhydride resin. Among these resins, ethyl cellulose is particularly preferred.

### (4) Content of Gold Powder in Gold Paste

The content of the gold powder in the gold paste is preferably 80% by mass or more and 98% by mass or less on a mass basis (based on the mass of the entire paste). If the content is less than 80% by mass, voids are formed during temperature increase, and hence a bonding portion in a suitable bonding state is difficult to obtain. If the content is more than 98% by mass, the gold powder may aggregate in some cases. The content of the gold powder is more preferably 82 to 96% by mass.

### (5) Method for Producing Gold Paste

In a method for producing a gold paste of the present invention, it can be produced by mixing the gold powder and the organic solvent described above. A method for producing the gold powder is not especially limited, and is preferably a wet reduction method. In a method for producing a gold powder having the above-described average particle size by employing the wet reduction method, a reducing agent and a gold salt are added to a solution in which gold colloidal particles are dispersed as nuclear particles, and the particles are grown to form (granulate) a gold powder. Synthesis of the gold colloidal particles used as particles for the granulation is also basically based on the wet reduction method, and a gold salt used as a raw material is mixed with a reducing agent in a solvent to precipitate gold through reduction, to thereby obtain gold colloidal particles. Through the process including these two steps based on the wet reduction method, a gold powder having a desired average particle size can be produced.

As the gold salt used in the step of synthesizing the gold colloidal particles and the step of granulating the gold powder, a chloride, a nitrate, a sulfate, or the like of gold is preferred. Specific examples include chloroauric acid salt, gold sulfite, and gold cyanide. As the reducing agent for producing the gold colloidal particles from the gold salt (gold ion) or for growing the gold colloidal particles, hydroxylammonium chloride, sodium borohydride, dimethylamine boron, tri-sodium citrate dihydrate or the like are applicable.

The respective steps of synthesizing the gold colloidal particles and of granulating the gold powder cause the reaction to proceed in a solvent. The solvent is preferably an aqueous solvent capable of dissolving the gold salt and the reducing agent. The aqueous solvent is water, or a mixed solvent of water and an organic solvent, and water is more preferred. Through the step of synthesizing the gold colloidal particles and the step of granulating the gold powder, the gold powder can be obtained. The average particle size of the gold powder thus produced can be within the range of the present invention by adjusting production conditions in the respective steps.

The gold powder of the gold paste of the present invention is covered with a covering agent containing a prescribed element or ion, or functional group. In this regard, when the covering agent to be used is an element (ion) such as Cl (Cl⁻), a compound containing the same element as the covering agent such as a chloride can be used as the gold salt used as the raw material or the like in the respective steps, and thus, the element such as the chlorine derived from the gold salt adsorbs to the gold powder to work as the covering agent. However, even when a chloride or the like is used in the step of producing the gold powder, it is difficult to cause the gold paste to contain the covering agent in the coverage ratio required in the present invention (33% or more).

Therefore, the production of the gold paste of the present invention requires, after producing the gold powder, a covering treatment for adsorbing the element (ion) or functional group working as the covering agent to the gold powder to be performed. A specific method of this covering treatment is as follows: from the solvent containing the gold powder produced by the wet reduction, the gold powder is separated and collected, and the collected gold powder is brought into contact with an organic solution containing a compound having any element of Cl, Br, I, and S, or an ion containing any of these elements, or a functional group containing any of these elements as a covering treatment liquid. In the production step of the gold powder (wet reduction method), an aqueous solution is usually used, and hence water is adsorbed to the collected gold powder. The reason why the organic solution is used in the covering treatment is that solvent replacement of the water being adsorbed to the gold powder with the organic solution is caused to thereby effectively adsorb the covering agent. The organic solution containing a compound having any element of Cl, Br, I, and S, or an ion containing any of these elements, or a functional group containing any of these elements refers to a solution consisting of an organic solvent having any of these elements, ions, or functional groups in its molecular structure; or a solution obtained by dissolving such an organic solvent in an appropriate organic medium; or a solution obtained by dissolving, in an appropriate organic medium, an inorganic compound containing any of these elements, ions, and functional groups. Examples of the organic medium for dissolving the organic solvent include alcohol, toluene, and hexane.

Specific examples of the covering treatment liquid used for covering with Cl (Cl⁻) include tetrachloroethylene (perchloroethylene), trichloromethane (chloroform), and a sodium hypochlorite aqueous solution. Specific examples for covering with Br (Br) include benzyl bromide, tetrabromomethane, and tetrabromoethylene (tetrabromoethene). Specific examples for covering with I (I⁻) include tetraiodoethylene (tetraiodoethene), and a potassium iodide solution. Specific examples for covering with S (SO₄²⁻) include a ferric chloride aqueous solution, and a solution of carbon disulfide sodium hydrogen sulfide. Specific examples for covering with a thiol group, which is a functional group containing S, include organic solutions such as octanethiol, hexanethiol, pentanethiol, and butanethiol.

The coverage ratio of the gold powder with the covering agent can be controlled by adjusting the concentration of the covering treatment liquid used in the covering treatment (the concentration of the organic solvent or the inorganic compound described above), and the treatment time. The covering treatment can be performed at room temperature. The covering treatment may be performed a plurality of times to cover the gold powder with a plurality of covering agents. For example, a gold powder having been covered with Cl may be subjected to a covering treatment with a thiol group. S of a thiol group has a high bonding property to a gold powder (particularly a gold powder), and can bond to a gold powder having been covered with another covering agent such as Cl by replacing the another covering agent. Thus, the gold powder can be covered with both Cl and a thiol group.

The gold powder having been treated with the covering treatment liquid in this manner can be subjected to filtration or decantation to collect the gold powder. The collected gold powder may be washed if necessary, and is mixed with an organic solvent to obtain a gold paste.

(6) Method for Producing Electrode, Bonding member or the like from Gold Paste of Present Invention

The gold paste of the present invention is useful in various applications such as bonding, sealing, and formation of electrodes and wirings in the electric and electronic fields. In these applications, the gold paste of the present invention is applied to a target such as a substrate or a material to be bonded. Then, the resultant gold paste is dried to form a dried matter, and at the time of bonding, the gold paste is heated to form a sintered body of the gold powder working as a bonding portion.

A method for applying the gold paste is not especially limited, and for example, any of various methods such as a spin coating method, a screen printing method, an inkjet method, a dripping method, and a dip coating method can be employed in accordance with the size, the shape and others of a target to be coated. Besides, in forming a patterned coating film such as those in a wiring pattern or a sealing pattern, the gold paste can be applied after masking a base material with a metal mask, a resist, or the like.

The drying after applying the gold paste is the step of heating the gold paste to volatilize the organic solvent. The drying step also serves a treatment for forming the gold paste into a dried matter having given strength to obtain a state suitable for handling in excessive paste removal and sintering treatment subsequently performed. As the drying step, vacuum drying is useful due to the volatilization property of the organic solvent used, in which the gold paste is placed in a reduced pressure atmosphere. It is preferable that a pressure employed in the atmosphere of the vacuum drying should be 0.01 kPa to 70 kPa, and that a retention time should be 30 to 60 minutes.

As described above, the gold paste of the present invention can assure the processability of the dried matter obtained from the drying treatment. Examples of the processing of the dried matter of the gold paste include scraping for removing an excessive portion of the paste remaining on a mask after applying and drying the gold paste on a masked base material. In the present invention, the excessive portion of the paste can be efficiently removed in this processing. Besides, neither a dried powder remains on the base material nor the gold powder present in a hole of a mask pattern is scooped out.

After drying the gold paste, the gold powder is sintered to form a sintered body of the gold powder. A heating temperature in this step is preferably 150°C or more and 350°C. Since the gold powder is covered with the covering agent in the present invention, the sintering is performed preferably at 150°C or more for effectively removing the covering agent. If the sintering temperature is higher than 350°C, bonding among the gold particles excessively proceeds to cause necking among the gold particles to thereby lead to strong bonding, so that the resultant becomes too hard. Besides, the heating at a temperature higher than 350°C may deform a base material, a substrate or the like, and cause a thermal effect. A heating time in the sintering step is preferably 30 minutes or more and 120 minutes or less. The atmosphere employed in the sintering step may be the air, or may be a vacuum atmosphere or an inert gas atmosphere. The sintering step is performed with no pressure applied. If the temperature is lower than 150°C, resultant point contact and bonding between the gold particles are week.

Before the sintering step, the dried matter of the gold paste may be calcined at a lower temperature than in the sintering step. The calcination increases the strength of the dried matter, and the handleability when subjecting to the sintering step is improved. In the calcination, the dried matter is heated preferably at 80°C or more and 130°C or less.

Although the gold paste of the present invention is improved in the processability of the dried matter obtained from drying, the gold paste can be used in an application not requiring the drying step. An example of the application not requiring the drying step is a case in which a gold paste needs not be formed into a pattern but is used for a bonding member. In such an application, the gold paste having been applied can be directly subjected in the sintering step.

### Advantageous Effects of Invention

As described above, a gold powder has an appropriate covering agent in the gold paste of the present invention, and thus, appropriate processability is imparted to a dried matter formed in the drying step after applying. The covering agent reduces the binding force of the gold powder only at the stage of drying, but is removed at a sintering temperature. The covering agent also acts as a stabilizer of the gold powder, and can thus suppress change in the state of the gold powder after being formed into the dried matter. The gold paste of the present invention has low-temperature sinterability equivalent to that of a conventional technique, and can form a sintered body of the gold powder useful in various applications such as an electrode, bonding, and sealing.

### DETAILED DESCRIPTION OF THE PREFERRED EMBODIMENTS

Now, preferred embodiments of the present invention will be described.

Preliminary Examination: First, as preliminary examination of a conventional technique, a plurality of gold powders having different particle sizes were produced by a wet reduction method using a chloroauric acid solution, and gold pastes were produced without performing covering treatment on the gold powders. Then, for each of the gold pastes, a coverage ratio with chlorine working as a covering agent was measured, a dried matter obtained from the gold paste applied was then evaluated for processability, and a volume resistivity after sintering was measured.

### [Production of Gold Powder]

1 L of pure water was put in a beaker, and was heated on a hot plate up to 81°C. At the time when the pure water reached 81°C, 3 g of alkylamine acetate was added thereto, followed by stirring with the temperature maintained until the solution became transparent. To the solution after the stirring, 0.2 g of hydroxylammonium chloride was added, the resultant was stirred for 1 minute, and a chloroauric acid solution (corresponding to a mass of gold of 0.04 g) was added thereto. This chloroauric acid solution was obtained by dissolving 200 g of gold bullion having purity of 99.99% by mass or more in aqua regia, and then removing nitric acid from the resultant. Thereafter, the solution was stirred for 1 hour with the temperature maintained at 80 ± 2°C to obtain a red transparent gold colloidal solution. The gold colloid worked as a nucleus of a gold powder, and was found to have an average particle size in a range of 10 nm to 50 nm through observation with a transmission electron microscope.

In the step of producing (granulating) a gold powder by adding a gold salt and a reducing agent to a gold colloidal solution, the particle size of the gold powder to be produced is changed by adjusting the number of gold colloidal particles in the reaction system. In the production of the gold powder in the preliminary examination of the present embodiment, the gold powder was produced by adding a gold salt and a reducing agent to the whole amount of the gold colloidal solution produced as described above. Furthermore, portions of the gold colloidal solution produced as described above were taken out, and the gold colloidal solutions thus adjusted in the number of gold colloidal particles were used to produce gold powders having different particle sizes. On this occasion, the amount of respective portions of the gold colloidal solution taken out was adjusted, and pure water was added to the respective portions of the solution taken out to thereby equalize the amount. In this preliminary examination, four gold powders having different particle sizes were produced.

In the production of a gold powder, 200 g of hydroxylammonium chloride used as a reducing agent, and 2 L of a chloroauric acid solution for granulating the gold powder were added to each of the four gold colloidal solutions prepared as described above. After adding the chloroauric acid solution, the resultant solution was stirred for 0.5 hours with the temperature maintained at 80 ± 2°C, to produce 200 g of a gold powder. The gold powder was collected by filtration, and a washing was performed once by immersing and stirring the gold powder in 1 L of isopropyl alcohol (IPA) for 3 minutes.

### [Production of Gold Paste]

In the preliminary examination, four gold powders (No. 1 to No. 4) having different average particle sizes were produced based on the above-described steps. The gold powders were each mixed with menthanol as an organic solvent to prepare four gold pastes. The content of the gold powder was 90% by weight.

### [Measurement of Average Particle Size and Coverage Ratio of Gold Powder]

Each gold paste was measured for an average particle size (mean volume-surface diameter) of the gold powder, D_{Au}. The average particle size D_{Au} was measured as follows. An appropriate amount of the gold paste was collected and dried; then the resultant was subjected to SEM observation; 2800 Au particles were arbitrarily selected from the resultant image; the particle sizes (maximum caliper diameters) of the Au particles were measured using image analysis software; and the mean volume-surface diameter D_{Au} was calculated.

For calculating the coverage ratio of each of the gold pastes, the gold paste obtained using each gold powder immediately after production was analyzed by a thermal desorption method to measure the chlorine concentration (Cc). In the measurement of the chlorine concentration, the gold paste was collected, followed by weighing, and heated at 900°C in a combustion tube, and the thus generated gas was absorbed by an adsorption liquid (mixture of 25 mL of a hydrogen peroxide solution and 15 mL of ultrapure water). The resultant absorption liquid was analyzed by ion chromatograph to measure the amount (µg) of chlorine, and the amount of chlorine in 1 g of the gold paste was obtained based on the mass of the collected gold paste, and was determined as the chlorine concentration Cc (µg/g (ppm)). Here, the lower limit of determination was 10 µg/g. Then, for each of the four gold pastes, the total cross-sectional area of chlorine, Sc, was calculated based on the chlorine concentration Cc in 1 g of the gold paste, the specific surface area S_{Au} was calculated based on the average particle size D_{Au} of the gold powder, and the coverage ratio with chlorine (S_{C}/S_{Au}) was obtained.

### [Evaluation of Processability of Dried Matter]

The processability of a dried matter of each gold paste was evaluated by applying and drying the gold paste on a substrate covered with a metal mask, and measuring shear strength of the thus obtained dried matter. In a processability evaluation test, a Si wafer having a gold sputtered film on a paste-coated surface in a disk shape having a diameter of 2 inches was used as a substrate, and the substrate was covered with a metal mask (of stainless steel) having a thickness of 350 µm and also having a hole in a rectangular shape with a dimension of 5 mm × 20 mm, in such a manner as to have the hole positioned at the center of the substrate. Then, the gold paste was dropped onto the metal mask, and spread thereon with a squeegee so as to apply and fill the gold paste in the hole. Thereafter, an excessive portion of the paste was wiped off, the metal mask was removed, and then, the resultant gold paste was dried. For drying, the substrate was placed in a vacuum atmosphere (pressure 100 Pa). The thickness of the dried matter obtained from the drying was about 130 µm.

Then, the dried matter thus formed was scraped off with a bond tester (Nordson Dage 4000, manufactured by Nordson Corporation), and the shear strength at this point was measured. Conditions for the measurement were a test tool width of 0.03 inches, a test height of 3 µm, and a test speed of 200 µm/s. In the evaluation of the processability, shear strength of 10 gf or less was regarded as acceptable, and shear strength lower than this was determined as good processability. The reason for regarding the shear strength of 10 gf or less as acceptable is as follows. From experience of the present applicant, a dried matter having a strength higher than 10 gf may lead to residual gold powder on the surface of a substrate or a mask to cause a scratch, and a dried matter having a strength higher than 50 gf cannot be removed in some cases.

### [Measurement of Volume Resistivity of Sintered Body]

The sintering step was performed after the drying, and a volume resistivity of the resultant sintered body was measured to examine usefulness of the sintered body as an electrode or the like, and influence of the covering agent. In this examination, the same metal mask as that used in the processability evaluation test was placed on an alumina substrate, the gold paste was applied and dried in the same manner as described above, and the resultant was sintered at a sintering temperature of 230°C for a sintering time of 1 hour. Then, the volume resistivity of the sintered body was measured with a resistivity meter (manufactured by Nittoseiko Analytech Co., Ltd., Loresta GP MCP-T610).

Table 1 shows the results of the processability evaluation of the gold pastes produced in this preliminary examination and the volume resistivities of the sintered bodies of the gold pastes. Table 1 also shows the average particle sizes of the gold powders produced here, and the coverage ratios with chlorine of the gold pastes.

**[Table 1]**

| | Gold Powder | Gold Paste | | Shear Strength of Dried Matter (gf) | Volume Resistivity (µΩ·cm) |
|---|---|---|---|---|---|
| | Average Particle Size (µm) | Cl Concentration (ppm/g) | Coverage Ratio | | |
| 1 | 0.18 | 310 | 31% | 139 | 6.4 |
| 2 | 0.26 | 189 | 28% | 209 | 6.3 |
| 3 | 0.32 | 122 | 22% | 38 | 12.5 |
| 4 | 0.47 | 81 | 21% | 12 | 22.7 |

Referring to Table 1, it was confirmed that the coverage ratio with Cl was 31% or less in the conventional gold powders and the gold pastes including them. It was confirmed that all the dried matters obtained from these gold pastes had a shear strength more than 10 gf, and were poor in the processability. The gold pastes of the gold powders having smaller average particle sizes resulted in a low volume resistivity after sintering and were good in low-temperature sinterability, but the dried matter were liable to have high strength and thus poor in the processability. The gold pastes of the gold powders having larger average particle sizes were opposite to the above. It is deemed, as described above, that the low-temperature sinterability of a gold paste and the processability of a dried matter are in a trade-off relationship. With regard to the gold paste No. 4, which included the gold powder having an average particle size larger than 0.4 µm, the strength of the dried matter was near the acceptable level, but the sintered body had a high volume resistivity. Based on this preliminary examination, it was confirmed that the average particle size of the gold powder should be 0.4 µm or less for maintaining the low-temperature sinterability, and that when the particle size of the gold particles is to be optimized for this purpose, it is necessary to improve the processability of the dried matter.

In comparison among the gold pastes No. 1 to No. 4, the chlorine concentration was higher as the average particle size was smaller. This is probably because the frequency of contact of chlorine with a gold powder having a smaller particle size, namely, having a large specific area, increases to thereby increase the amount of chlorine bonded. Therefore, a gold paste including a gold powder having a smaller average particle size has a higher chlorine content, and also has a higher coverage ratio. **It** is presumed, however, that the effect of removing chlorine by washing is smaller as the average particle size of the gold powder is smaller, and therefore, it is presumed that the coverage ratio of the gold powder produced through the conventional processes is limited to the numerical range shown in Table 1 no matter whether the washing step is performed or not. Besides, it is presumed that since the amount of chlorine bonded is small in the gold powder having a large average particle size, the amount of chlorine reduces at the stage of separating the gold powder from the reaction solution before washing, and that thus, the coverage ratio is low no matter whether the washing step is performed or not.

First Embodiment: Based on the results of the preliminary examination, a gold paste was produced by subjecting a gold powder to a covering treatment in the present embodiment, and the processability of a dried matter was evaluated. In the present embodiment, a gold powder was produced by the wet reduction method in the same manner as in the preliminary examination, the gold powder was covered with Cl as a covering agent to produce a gold paste. While the conditions of the covering treatment adjusted, gold powders having different coverage ratios were produced, and gold pastes were produced from the gold powders. The thus produced gold pastes were evaluated for the processability of a dried matter, and the property of a sintered body.

### [Production of Gold Powder]

1 L of pure water was put in a beaker, and was heated on a hot plate up to 81°C. At the time when the pure water reached to 81°C, 2 g of alkylamine acetate was added thereto, followed by stirring with the temperature maintained until the solution became transparent. To the solution after the stirring, 0.3 g of hydroxylammonium chloride was added, the resultant was stirred for 1 minute, and a chloroauric acid solution (corresponding to a mass of gold of 0.1 g) was added thereto. Then the solution was stirred for 1 hour with the temperature maintained at 80 ± 2°C to obtain a red transparent gold colloidal solution. The gold colloid worked as a nucleus of a gold powder, and was found to have an average particle size in a range of 10 nm to 50 nm through observation with a transmission electron microscope.

To the gold colloidal solution obtained in the gold colloid synthesis step described above, 200 g of hydroxylammonium chloride was added as a reducing agent. Then, a chloroauric acid solution (1.5 L) for granulating a gold powder was added thereto. After adding the chloroauric acid solution, the resultant solution was further stirred for 0.5 hours with the temperature maintained at 80 ± 2°C to produce 200 g of a gold powder.

The reaction solution in which the gold powder was produced as described above was filtered to collect the gold powder, and the gold powder was subjected to a covering treatment. In the present embodiment, 100% perchloroethylene was used as a covering treatment liquid. The covering treatment was performed by adding the covering treatment liquid to the gold powder for immersion. Then, the gold powder after the treatment was collected by filtration, and was washed by immersing the powder in 1 L of isopropyl alcohol (IPA). In the present embodiment, the time of immersing the gold powder in perchloroethylene was changed in a range from 0.5 hours to 24 hours to adjust a coverage ratio. Here, a portion of the gold powders was not subjected to the covering treatment, and six gold powders (a-1 to a-6) having different coverage ratios were thus prepared.

### [Production of Gold Paste]

Then, gold pastes were produced respectively from the six gold powders (a-1 to a-6) produced as described above. The six gold pastes were respectively prepared by mixing the gold powder with menthanol used as an organic solvent. The content of the gold powder was 90% by weight in all the gold pastes.

### [Measurement of Average Particle Size and Coverage Ratio of Gold Powder]

For the thus produced gold pastes, the average particle size D_{Au} (mean volume-surface diameter) were measured based on SEM observation images, in the same manner as in the preliminary examination. Besides, a volume-weighted particle size distribution on this occasion was measured to calculate the proportion of gold powder having a particle size larger than 0.4 µm (coarse particles). In addition, in the same manner as in the preliminary examination, a chlorine concentration (Cc (µg/g (ppm))) of each gold paste was measured to obtain a total cross-sectional area of chlorine, S_{C}. Then, the average particle size D_{Au} and the specific surface area S_{Au} of each gold powder were calculated to obtain a coverage ratio with chlorine (S_{C}/S_{Au}).

### [Evaluation of Processability of Dried Matter]

The method and conditions for evaluating the processability of a dried matter of each gold paste were the same as those employed in the preliminary examination, and each gold paste was applied to a substrate (5 mm × 20 mm, thickness: 350 µm), followed by vacuum-drying to produce a processability evaluation sample. The apparatus and conditions for measuring shear strength of a dried matter were the same as those described above. In this embodiment, four evaluation samples were prepared for each of the six gold pastes, and three samples out of the four samples were stored in a storage at room temperature. Then, a first sample not stored (sample immediately after the preparation) was subjected to processability evaluation. Thereafter, after 3 hours, 24 hours, and 28 hours had elapsed from starting the storage, one sample each was taken out of the storage to be subjected to the processability evaluation test. In this manner, the processability of the dried matter when each storage time as described above had elapsed from the formation of the dried matter was examined for each gold paste.

### [Measurement of Volume Resistivity of Sintered Body]

In the same manner as in the preliminary examination, the volume resistivity of a sintered body obtained from the sintering step was measured, and thus, usefulness of the sintered body as an electrode or the like, and influence of the covering agent were examined. In the present embodiment, the dried matter was sintered at sintering temperatures of 100°C, 230°C, 300°C, and 350°C (for a heating time of 45 minutes in all) to measure volume resistivities.

Besides, each gold paste was applied and dried on a substrate in the same manner, and sintered at a sintering temperature of 230°C. The volume resistivity was measured at a heating time of 10 minutes, 30 minutes, 60 minutes, or 120 minutes to examine change of the volume resistivity depending on the firing time.

The results of the examination of the gold pastes are shown in Table 2. In Table 2, the average particle sizes of the gold powders produced here, and the coverage ratios of the gold pastes with chlorine are also shown. It is assumed that the chlorine content in each gold paste did not change depending on the storage time, and hence it is assumed that the coverage ratios of the gold powders having been subjected to the same covering treatment were the same.

**[Table 2]**

| No. | Gold Powder | | Gold Paste | | Shear Strength of Vacuum-dried Matter (gf) | | | | Temperature-dependent Change of Volume Resistivity (µΩ·cm) | | | | Sintering Time-dependent Change of Volume Resistivity (µΩ·cm) | | | |
|---|---|---|---|---|---|---|---|---|---|---|---|---|---|---|---|---|
| | Average Particle Size (µm) | Coating Treatment | Cl Concentration (ppm/g) | Coverage Ratio | Immediately after Production | 3 hours Storage | 24 hours Storage | 28 hours Storage | 100°C 45 min | 230°C 45 min | 300°C 45 min | 350°C 45 min | 230°C 10 min | 230°C 30 min | 230°C 1 h | 230°C 2 h |
| a-1 | 0.28 | No | 175 | 28% | 43 | 65 | 196 | 206 | 42.9 | 9.3 | 5.1 | 3.0 | 9.0 | 7.1 | 6.4 | 6.4 |
| a-2 | | Yes | 188 | 30% | 16 | 28 | 121 | 150 | 48.3 | 9.5 | 5.1 | 2.9 | 9.4 | 6.1 | 6.5 | 6.4 |
| a-3 | | Yes | 198 | 31% | 11 | 30 | 62 | 51 | 45.7 | 9.7 | 5.0 | 2.8 | 12.0 | 7.7 | 7.8 | 7.6 |
| a-4 | | Yes | 212 | 33% | 6 | 8 | 7 | 8 | 150.0 | 10.1 | 4.9 | 2.9 | 180.0 | 9.1 | 8.8 | 8.9 |
| a-5 | | Yes | 218 | 34% | 5 | 5 | 5 | 6 | 5.0×10⁶ | 9.0 | 5.0 | 2.8 | 120.0 | 8.9 | 8.0 | 8.0 |
| a-6 | | Yes | 261 | 41% | 3 | 5 | 5 | 6 | 2.8×10⁸ | 10.5 | 5.0 | 2.7 | 1398.4 | 11.8 | 8.1 | 8.0 |

| | | | | | | | | | | | | | | | | |
|---|---|---|---|---|---|---|---|---|---|---|---|---|---|---|---|---|
| *The proportions of coarse particles in the gold powders were 28% to 32%. | | | | | | | | | | | | | | | | |

As for the processability after the drying, which is the subject of the present invention, it is understood from Table 2 that the gold pastes produced from the gold powder not subjected to the covering treatment with Cl (a-1), and the gold powders having the coverage ratio with Cl of less than 33% (a-2: coverage ratio of 30%, a-3: coverage ratio of 31%) formed dried matters having a shear strength of higher than 10 gf, and were poor in the processability. **It** was confirmed that the processability of the dried matter can be ensured when the coverage ratio of the gold powder was 33% or more (a-4 to a-6).

**It** is also understood that when the storage time of the processability evaluation sample was longer, the processability of the dried matter of the gold paste was liable to reduce. This liability was observed in all the gold pastes of the present embodiment. In the gold pastes having the coverage ratio of less than 33% (a-1: coverage ratio of 28%, a-2: coverage ratio of 30%, a-3: coverage ratio of 31%), however, the strength of the dried matters increased, through the storage for 3 hours or 24 hours or more, to an extent such that it was impossible to substantially process the dried matters. On the other hand, in the gold pastes having the coverage ratio of 33% or more (a-4 to a-6), the reduction in the processability through the increase of the storage time of the dried matter was suppressed. It is presumed that Cl used as the covering agent suppresses change in the state caused in the gold powder having been formed into the dried matter.

It is deemed, from the measurement results of the volume resistivities of the sintered bodies, that the covering agent of the gold powder itself may be a cause of increasing the resistivity of the sintered body, but that the influence can be eliminated by optimizing the sintering conditions. Specifically, in the present embodiment, the increase of the volume resistivity of the sintered body was suppressed by employing a sintering temperature of 230°C or more and a sintering time of 30 minutes or more, even when the coverage ratio was 33% or more. This is probably because the covering agent was desorbed and removed by optimizing these sintering conditions.

Furthermore, considering both the present embodiment and the preliminary examination, it can be confirmed that the improving effect of the covering agent (Cl) on the processability of the dried matter should not be specified only by the concentration of the covering agent (Cl) in the gold paste. For example, the Cl concentration in the gold paste No. 1 of the preliminary examination in Table 1 was higher than the Cl concentrations of all the gold pastes of the present embodiment (Table 2), but the dried matter of the gold paste No. 1 had a high shear strength and was thus poor in processability. The reason for this is probably that the average particle size of the gold powder No. 1 was small, and that the coverage ratio was less than 33%. Accordingly, for evaluating the effect of the covering agent, it is necessary to use a coverage ratio (S_{C}/S_{Au}), for which both the average particle size of a gold powder (specific surface area (S_{Au})) and the concentration of the covering agent (total cross-sectional area Sc) are taken into consideration.

Second Embodiment: Here, a gold paste containing a gold powder with two covering agents: Cl and a thiol group, which is a functional group containing S, was produced, and the processability of a dried matter of the gold paste and a volume resistivity of a sintered body were evaluated.

### [Production of Gold Powder]

In the same manner as in First Embodiment, alkylamine acetate was added to pure water at 81°C, the resultant was stirred, and then 0.5 g of hydroxylammonium chloride was added thereto, followed by stirring. A chloroauric acid solution (corresponding to a mass of gold of 0.1 g) was added thereto, and the resultant was stirred for 1 hour with the temperature maintained to obtain a gold colloidal solution. To the solution thus obtained in the gold colloid synthesis step, 400 g of hydroxylammonium chloride was added as a reducing agent. Then, 0.5 L of a chloroauric acid solution was added thereto. Thereafter, with the solution maintained at a temperature of 80 ± 2°C, the solution was stirred for 0.5 hours to produce 70 g of a gold powder (gold powder b).

Next, in the same manner as in First Embodiment, a covering treatment was performed by adding the gold powder to 100% perchloroethylene used as a covering treatment liquid, followed by immersion for 24 hours. The gold powder having been treated was collected by filtration, and washed by immersion in 1 L of isopropyl alcohol (IPA).

Then, the gold powder having been subjected to the covering treatment with chlorine was contacted with octanethiol to replace a part of the chlorine with a thiol group. The specific method was as follows. 3.33 g (corresponding to a mass of gold of 3 g) of a gold powder slurry (gold powder: 90% by mass) including IPA as a dispersion medium was put in a 200 mL beaker. The gold slurry was maintained at 60°C under stirring, and an octanethiol solution in IPA was added thereto. After the covering treatment with octanethiol, the resultant gold powder was collected by filtration and dried. In the present embodiment, a gold powder not subjected to the treatment with octanethiol, and gold powders adjusted in the coverage ratio by using three octanethiol solutions having different concentrations (octanethiol concentrations of 48 ppm, 480 ppm, and 4000 ppm) were prepared.

Thereafter, the gold powders were washed and dried in the same manner as in First Embodiment, and gold pastes were produced with an organic solvent. For the thus produced gold pastes, the average particle size and the proportion of coarse particles were measured in the same manner as in First Embodiment, the contents of Cl and S were measured by the thermal desorption method, and the concentrations of Cl and S, and the coverage ratios therewith were measured and calculated.

Then, in the same manner as in First Embodiment, the processability (shear strength) of dried matters was evaluated. Besides, after applying the gold pastes, the resultants were fired at 230°C to produce sintered bodies, and the volume resistivities of the sintered bodies were also measured. These results are shown in Table 3.

**[Table 3]**

| No. | Gold Powder | Gold Paste | | | | | Dried Matter | Sintered Body |
|---|---|---|---|---|---|---|---|---|
| | Average Particle Size (µm) | Cl | | S | | Total Coverage Ratio | Shear Strength (gf) | Volume Resistivity (µΩ·cm) |
| | | Concentration (ppm/g) | Coverage Ratio | Concentration (ppm/g) | Coverage Ratio | | | |
| b-1 | 0.21 | 375 | 45% | - | - | 45% | 9 | 5.5 |
| b-2 | | 239 | 29% | 10 | 1% | 30% | 150 | 5.0 |
| b-3 | | 192 | 23% | 105 | 14% | 37% | 9 | 5.2 |
| b-4 | | 3 | 0% | 750 | 100% | 100% | 4 | 5.9 |

| | | | | | | | | |
|---|---|---|---|---|---|---|---|---|
| *b-1 was covered with only Cl and not covered with thiol. *The proportion of coarse particles was 2.4%. | | | | | | | | |

Referring to Table 3, it is confirmed that when a gold powder covered with Cl was treated with a thiol compound solution, a part of Cl was replaced with thiol (S). Here, as the thiol concentration (amount added) in the covering treatment liquid was increased, the coverage ratio with chlorine reduced and the coverage ratio with thiol (S) increased (b-2 to b-4). Also when S was thus added as the covering agent by replacement, it is deemed that the processability of the dried matter was good as long as the total coverage ratio was higher than 33% (b-3 and b-4). **It** is also deemed that the gold paste was good in the volume resistivity of the sintered body formed. For the gold paste b-2, since the thiol concentration in the treatment liquid was low in the covering treatment with octanethiol, the coverage ratio with thiol was low, and the total coverage ratio was lower than 33%. In this gold paste, the coverage ratio with thiol increased slightly, but it is presumed that the coverage ratio with chlorine largely reduced because the gold powder was washed with the solvent (IPA) in the covering treatment.

### Industrial Applicability

The gold paste of the present invention imparts appropriate processability to a dried matter formed in the post-coating drying step. Therefore, in forming a fine shape or pattern in a coating film of the gold paste, an excessive portion can be easily removed and processed from the dried matter. The gold paste of the present invention has this property while still maintaining low-temperature sinterability. The gold paste of the present invention is useful in forming an electrode or wiring material, and a bonding or sealing member in various applications including electric/electronic components, semiconductor devices, semiconductor elements, power devices, MEMS, and the like.

## Claims

1. A gold paste comprising a gold powder and an organic solvent,
wherein the gold powder has purity of 99.9% by mass or more, and an average particle size of 0.1 µm or more and 0.4 µm or less,
at least a part of the gold powder is covered with a covering agent containing at least one of: any element of Cl, Br, I, and S, or an ion containing any of these elements, or a functional group containing any of these elements, and
a coverage ratio defined as a ratio S_{C}/S_{Au} is 33% or more and 100% or less, wherein Sc is a total cross-sectional area of the element derived from the covering agent calculated based on a concentration of the element in 1 g of the gold paste, and a specific surface area S_{Au} of the gold powder.

2. The gold paste according to claim 1, wherein the covering agent contains at least Cl.

3. The gold paste according to claim 1, wherein the covering agent contains Cl and a thiol group.

4. The gold paste according to claim 1 or 2, wherein a content of the gold powder is 80% by mass or more and 98% by mass or less based on a total mass of the gold paste.

5. A method for producing the gold paste defined in claim 1 or 2, comprising the steps of:
producing a gold powder having purity of 99.9% by mass or more, and an average particle size of 0.1 µm or more and 0.4 µm or less;
covering the gold powder with a covering agent by contacting the gold powder with an organic solution containing a compound having any element of Cl, Br, I, and S, or an ion containing any of these elements, or a functional group containing any of these elements; and
mixing the gold powder covered in the previous covering step with an organic solvent.
